# EUROPEAN PATENT SPECIFICATION

(11) **EP 1 462 952 B1**
(45) Date of publication and mention of the grant of the patent: **29.08.2007**
(21) Application number: 03290781.8
(22) Date of filing: 27.03.2003
(51) Int. Cl.: G06F 17/30

(54) **Method for indexing and searching a collection of internet documents**
Methode zur Indexierung und Recherche einer Sammlung von Internet Dokumenten
Méthode pour l'indexation et la recherche d'une collection de documents d'Internet

(43) Date of publication of application: 29.09.2004
(73) Proprietor: Exalead, 75019 Paris (FR)
(72) Inventor: Bourdoncle, François, 75014 Paris (FR)
(74) Representative: Hirsch & Associés

(56) References cited:
- US-A1- 2002 091 679
- BAGER J ET AL: "ALLE GEGEN GOOGLE WISENUT, TEOMA, VIVISIMO - NEUE KONKURRENZ FUER DIE POPULAERE SUCHMASCHINE?" CT MAGAZIN FUER COMPUTER TECHNIK, VERLAG HEINZ HEISE GMBH., HANNOVER, DE, no. 19, 10 September 2001 (2001-09-10), pages 104-106,108, XP001103608 ISSN: 0724-8679
- SPENCER P: "AltaVista" FILTRATION AND SEPARATION, ELSEVIER ADVANCED TECHNOLOGY, OXFORD, GB, vol. 37, no. 1, January 2000 (2000-01), page 49 XP004193971 ISSN: 0015-1882
- BHARAT K ET AL: "Who links to whom: mining linkage between Web sites" DATA MINING, 2001. ICDM 2001, PROCEEDINGS IEEE INTERNATIONAL CONFERENCE ON SAN JOSE, CA, USA 29 NOV.-2 DEC. 2001, LOS ALAMITOS, CA, USA,IEEE COMPUT. SOC, US, 29 November 2001 (2001-11-29), pages 51-58, XP010583259 ISBN: 0-7695-1119-8

## Description

The invention relates to the field of information retrieval, and more specifically to displaying results to a search query. It particularly applies to searches on the Internet, in Intranets, in mails, archives, files, databases or the like.

Throughout the present specification, the word "site" or "internet site" refers to a number of documents connected by links, with a given entry point.

A "web page" or html page is displayed to the end-user in a browser (such as the one provided by Microsoft Corporation under the trademark Internet Explorer or the one provided by Netscape Corporation under the trademark Navigator) as a single page; it is accessed by the user thanks to a given URL (universal resource locator). However, the page may be comprised of several frames; in this case, the "page" displayed to the user is a collection of different files:
- one file describes the various frames of the page and their location;
- one file per frame comprises the html content of the frame.

A web page may also comprise a number of links to various types of documents, in the form of URLs embedded in the page. The links may bring the user to html pages, to audio or video files, or to other linked files.

A number of searching tools or engines exist for searching and retrieving information on the Internet. Google proposes a searching tool for searching html files or text documents (in the PDF, Microsoft Word or RTF formats) available through the Interned. The results are returned to the user as a list of web pages. Each result is displayed as a URL, with an abstract of the document accessed through the URL. The abstract is an extract of sentences or part of sentences of the document. If a web page is comprised of frames, the result returned to the user is the URL of the frame, together with an abstract of the frame. Each frame is therefore searched and handled individually by the engine.

Google further offers a separate searching tool for searching images. Parsed documents are images files in image formats. The results are displayed as a collection of images with information on the size of the image and the URL of the web page containing the image. Selecting one image returns two frames, the upper frame containing the image and the lower frame containing the web page comprising the image.

Fast Search & Transfer ASA (FAST) operates a search engine under the trademark All the Web. A specific section of the search engine allows searches for audio files. For each result, the engine displays a set of features of the audio file, such as size and date; direct access to the file is possible. It is also possible to browse in the host containing the file, based on the truncated URL of the file. There is no reference to the web page that actually contains the file.

Alta Vista Company proposes separates search engines for searching text, audio or video files. In response to a request in the audio mp3 search engine, the user is provided with a list of results. For each result, there is provided the name of the mp3 file, information about the mp3 file, such as the size, as well as the URL of the page containing the link to the mp3 document. It is also possible to display a list of media available on the same page. The display for one result to the search in the French engine, with the keyword "Monteverdi" is the following:
Fichier et nom Monteverdi - Laudate.mp3
Fichier et infos • Mono • 6 min 9 sec
Page et URL http://webcampus3.stthomas.edu/jm...1567 1643CE.htm

Plus de médias en provenance de cette page • Plus d'infos

Kelkoo operates a shopping site, where the user may search for products. The results are displayed as a URL and features of the corresponding product, extracted from the web page referenced by the URL.

AOL displays, for certain searches, a widget comprised of a URL, an abstract of the web page and links to other pages. The widget is actually a precomputed response and does not correspond to the results provided by the search engine. The widget does not represent the result provided by a search engine.

There remains a need for a solution allowing the user of a search engine to efficiently browse results provided by the search engine. In addition or alternatively, there is a need for a solution permitting a more efficient search in context among web pages, irrespective of the type of searched documents or files.

V. Harmandas et al., Image retrieval by hypertext links, Proceedings of the 20 th annual international ACM SIGIR conference on Research and Development in Information retrieval, pages 296-203, Philadelphia PA, presents a model for retrieving images from a large world wide web USA, 1997 collection. Links are used to calculate representations for non-textual nodes that permit direct retrieval of these nodes by textual query.

The invention is defined in claim 1. Additional possible features appear in dependent claims.

A search engine embodying the invention will now be described, by way of example only, and in reference to the attached drawings, where
- figure 1 is a schematic view of web page;
- figure 2 is a schematic view of the various documents forming the page of figure 1 ;
- figure 3 is a display of results provided by a search engine in one embodiment of the invention;
- figure 4 is a flowchart of a process according to a second embodiment of the invention.

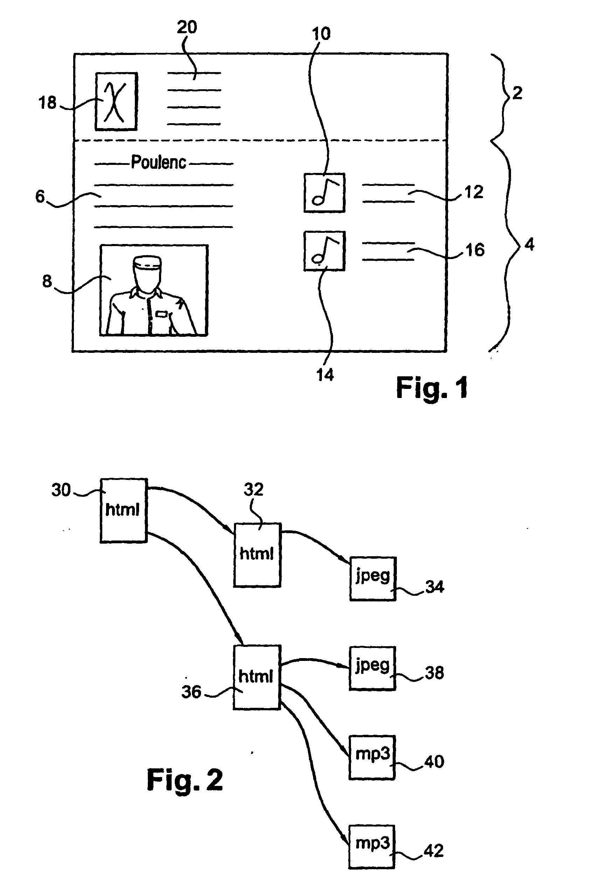

Figure 1 is a schematic view of a web page, as displayed to a user on a state of the art browser. The page is displayed to the user as a single document and is handled by the user as a single logical document. However, the page is actually comprised of a number of physical files, as represented in figure 2.

In the proposed example, the page comprises two frames 2 and 4, that is a title frame and a second frame. Thus, as represented in figure 2, there is provided a first physical document 30 describing that there are two frames, the respective position of the two frames as well their location. The title frame contains a picture 18 and some text information 20. The title frame is thus actually comprised of a second physical document 32, containing the html coding the text information 20 and a reference to a third document 34, which contains the image 18. Document 32 may be a document in the jpeg or tiff format, for instance.

The second frame 4 contains various items of text 6, 12, 16, an image 8 as well as two audio links 10, 14. The second frame is formed of a fourth document 36, containing html coding for text 6, 12, 16; the fourth document refers documents 38, 40 and 42, which respectively contain the image 8 and the audio information 12, 14. In the example of figure 2, the image document 38 is in the jpeg format and the audio is formatted in mp3 files. These contain, in addition to the audio, additional attributes or information, e.g. size of file, duration and number of audio tracks and the like.

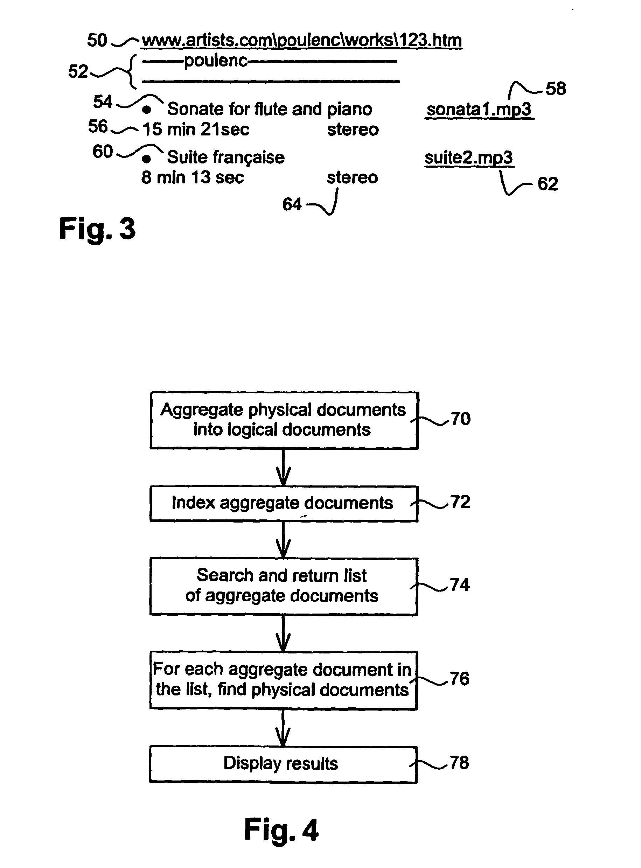

Thus, as represented in figure 2, a single page like in figure 1 may actually correspond to a number of physical documents, which are organised in several levels of reference. In the example of figure 2, there are three levels of reference between the various documents. These are represented schematically on figure 3 by the arrows between the documents.

In one embodiment, the invention suggests to take into account these references when displaying to the user the results of a search. In presence of a referencing document, which contains a reference to a referenced document, the search engine does not only provide the user with information or attributes of the referenced document, but also displays information or attributes of the referenced document. This makes it possible for the user of the search engine to browse among the referenced document and referencing document, in context - that is among the logical document - without having to select and display these documents.

Figure 3 is a display of results provided by a search engine in this first embodiment of the invention. For the sake of explanation, the search is assumed to be an audio search, using the keyword "Poulenc". In the page of figure 1, the search engine locates two audio works of this author, which are embodied in documents 40 and 42. The results are displayed to the user as a combination of information or attributes of the referencing document - document 36 representing the frame 4 - and information or attributes of the referenced document - documents 40 and 42. In addition, one may display the URL of the page. Specifically, figure 3 exemplifies :
- the URL 50 of the page;
- an abstract 52, extracted from the second frame, with the search keyword "Poulenc";
- the name 54 of the first located audio work, with a link 56 to this work;
- information 58 on this first work, such as the size of the corresponding document, the duration of the work, the interpreters and the like;
- the name 60 and a link 62 to the second work, and
- information 64 regarding the second work.

The display of figure 3 makes it possible for the user of the search engine to have a complete view, not only of one physical document, but of a whole logical document formed of several physical documents. In the example, the user may at first sight understand that the page - the referencing document - contains two different works of Poulenc - the referenced documents. He may directly consult one of the referenced documents in context, by simply selecting the link to the referenced document, without having to browse the referencing document. In addition, since the display shows content of the referencing document, the user is provided not only with information regarding the searched physical document - the mp3 document - but also with information regarding the context of the logical page where this document was found by the search engine. This allows the user to easily and efficiently select the relevant results in a list of results.

As a comparison, in the prior art solutions discussed above, the display of results only provides the user with information regarding the referenced document, without any indication relative to the content of the referencing document. To check the relevance of a result, the user needs to access the referencing document - by selecting the link to the referencing document - and read this document. First, this involves selecting the link to the referencing document and waiting till this document is displayed. Second, this involves reading part of the referencing document to identify the relevant section. In case the referencing document is long, the relevant information may not appear at first sight; the user would have to scroll the referencing document or search within the referencing document for locating the relevant part of the document.

The display of figure 3 thus makes it possible for the user to efficiently select relevant results in a list provided returned by the search engine. In addition, as in the example of figure 2, several physical documents may be displayed simultaneously. In the example of figure 3, two different audio works are displayed. These belong to the same logical document, since they are referenced by the same html page or referencing document. Thus, the user is provided with content information 52 from the common referencing document and with information regarding both referenced documents. As discussed, the user may appraise the relevance of the located physical documents, based on the content of the referencing document. In addition, the user may easily and directly understand that the referencing document actually references two possible results.

As a comparison, in prior art solution, results originating from the same web page - from the same logical document - are displayed as separate results. In the Altavista audio mp3 search engine discussed above, the user may identify that some results originate from the same web page, e.g. by recognising that the results refer to the same URL. However, comparing URLs is a tedious work. The user may also access the page "more media from the same page", but this is a separate page which only lists the media. Additional browsing is necessary; even when accessing the separate page, the user is not provided with content from the referencing document and may not easily identify the relevance of the results.

Figure 3 shows an application of the invention to the display of html pages. The invention is of use for other applications. In a shopping site, one could display to the user, for a given result various elements from different physical documents, e.g. a picture of the product, a short description of the product, its price, etc. These elements may be displayed together to the user, although they actually originate from various physical documents. The invention may also apply to folders, referencing various files (texts, images, spreadsheets, database or the like). In this case, the content of the referencing document - the folder - could include an abstract of the folder content, while the information regarding the referenced documents could include an abstract of the referenced document or its location. Another example is the application of the invention to searches among emails. The referencing document in this case would be an email. The referenced documents would be the attachments to emails, e.g. vcf files, text files, images or the like. If the invention is applied to searches in an Intranet like the one provided by Lotus Notes under the trademark Notes, the searches would be carried out in the notes and their attachments. The referencing document would in this case be a note, while the referenced document would be the attachments to the notes. For searches among a database, some fields in entries of the database may reference objects. The referencing document would be the entry or the field of the entry, while the referencing document would be the referenced object.

The displayed information may be selected in the various documents as discussed below in reference to the second embodiment of the invention. One may also, after having locating relevant physical document, consider the referencing document and extract part of the content of this referencing document. Alternatively, if the referencing document is located first, one may extract part of this document, locate the referenced document(s) and display information or attributes of the referenced document(s). The displayed referenced document may comprise all documents referenced in the referencing documents; one may also display only a subset of the referenced documents, according to the type of referenced document and / or to the position of the references in the referencing document. A proximity criterion and / or a relevance criterion could be used for selecting referenced documents. A proximity criterion may be carried out by measuring a distance in the referencing document between the searched terms and the links to the referenced documents. Relevance of referenced documents may be appraised as usual in the art of search engines.

Referenced documents may also be sorted. Again, one may use various criteria for sorting the documents, including proximity or relevance.

The content of the referencing document may, as in the example of figure 3, comprise excerpts of texts contained in the referencing document. This is the simplest embodiment. One could also display an image or a logo extracted from the referencing document.

The information or attributes of the referenced document may comprise :
- the name of the referenced document;
- the URL of the referenced document;
- part of the content of the referenced document, such as excerpts of text, reduced image, properties stored in a mp3 audio file (size, author, formats, download time, date, etc.).

In the example of figure 3, the result is displayed as a referencing document, with information regarding the referenced documents. This makes it possible for the user to easily identify other referenced documents, without having to browse through the referencing document. One could also imagine displaying information regarding the referenced document, together with some content of the referenced documents; this is less advantageous, in that the user would less easily perceive the relationship between the various documents referenced in a single referencing document.

In another embodiment of the invention, search is conducted not only in physical documents, but also in logical documents; in other words, the search engine takes into account not only separate physical documents, but also references between documents. The results of the search are therefore likely to be more relevant.

For instance, search for audio documents will take into account not only information stored within the audio files, but also information contained in the html pages where these audio files are referenced. In the example of figure 1, faced with a search using the keyword "Poulenc", a conventional search engine may return, as separate results, documents 10 and 14, based on the fact that the limited text information stored in these mp3 documents is likely to contain the name of the compositor of the music. However, a search with the keywords "Poulenc" and "française" may not return as a result document 14, unless the name "Suite française" is stored within the mp3 file. This embodiment of the invention not only applies to audio files, but to all other examples discussed in reference to the first embodiment.

According to this embodiment of the invention, the search engine searches not only the mp3 documents - the referenced document - but also document 36 - the referencing document -, which contains the html coding for the second frame 4. Thus, if one of the keywords appears only in the referencing document while the other one appears in the referenced document, the search engine will return a result. The second embodiment of the invention thus allows to locate more documents than the prior art search engines. In addition, the fact that the search is conducted not only in referenced documents, but also in referencing documents may help in ranking the results according to their relevance. This also improves the performance of the search engine, compared to prior art solutions.

The second embodiment of the invention may be carried out as follows. The process starts with the building of an index of documents. The index is built as known *per se.* However, instead of considering documents separately, referencing documents and referenced documents are considered in this embodiment as a single document. Thus, they are indexed together, as if they formed a single aggregate document. This may be carried out by providing an indexed table of aggregate documents, each aggregate document being associated in the table with the various physical documents that, together, form the aggregate document.

In the example of figures 1 and 2, the index would consider that both frames 2 and 4 as well as the various documents referenced in these frames form a single document. In other words, documents 30, 32, 34, 36, 38, 40 and 42 would be considered as a single aggregate or logical document. In the table of aggregate documents, the single logical documents would be associated with physical documents 30, 32, 34, 36, 38, 40 and 42.

Various methods may be used for recognising that physical documents should be associated or aggregated. The following methods may be used, notably for html documents. First, frames may be recognised; this makes it possible to aggregate the various frames that form a given html page. In the example of figures 1 and 2, documents 30 may be identified as defining a page comprised of two frames 2 and 4. Thus, documents 30, 32 and 36 would be aggregated into a single document. This ensures that both frames are considered as a single document for the purpose of search. Second, documents may be aggregated according to their types or formats. For instance, for permitting an audio or video search, an audio or video document may be aggregated with an html document that contains a link to the audio or video document. In the example of figures 1 and 2, documents 34 or 38 would be respectively aggregated with documents 32 or 36. According to this second method, the referencing document is aggregated to the referenced document. Third, documents may be aggregated based on references present in the document. When considering a physical document, one may scan the document to locate references and aggregate a referencing document with the documents it references. In the example of figures 1 and 2, document 32 would be aggregated with document 34. Document 36 would be aggregated with documents 38, 40 and 42. A combination of these methods may be used.

The aggregate documents may then be indexed. For indexing such an aggregate document, the physical documents forming the aggregate document are scanned for index terms. In the example of documents 36, 38, 40 and 42, the index terms may be found in the html content of document 36; they may comprise data found in documents 38, 40 or 42, such as the name of the documents, text information extracted from the documents or the like. The index terms found in the various physical documents are associated to the aggregate document in the index table. This amounts to saying that an entry in the index table, if associated to one physical document, is also associated with the other documents forming the aggregate document.

Once the index of aggregate documents is built, the search engine may operate conventionally on the index of aggregate documents. A query will then return a list of aggregate documents. The table of aggregate documents is read to find out which physical documents correspond to each aggregate document. The search engine then displays the physical documents, e.g. as suggested in the first embodiment discussed above or in any alternative display solution. One may notably display as search results the referencing document, as discussed in figure 3. Otherwise, one could also display the referenced documents. For instance, in an image search engine, image document 34 may be displayed as a result, based keywords located in referencing document 32. As in figure 3, an extract of the text of document 32 could be provided to the user for helping him to assess relevance of the results.

Figure 4 is a flowchart of a process for carrying out the second embodiment of the invention. In step 70, logical documents are recognised. Thus, physical documents are aggregated into logical documents. In step 72, logical or aggregate documents are indexed, thus producing an inverted index of aggregate documents. Step 74 is a step of search with the inverted index; it produces a list of aggregate documents. In step 76, for each aggregate document located in the search, corresponding physical documents are located. The results - physical documents - are displayed in step 78. One may use in this step the solution discussed in reference to figure 3. One may in this step, as discussed above, select and/or sort the displayed documents.

In figure 4, it is assumed that all indexed documents are aggregate documents; however, it is also possible to build the inverted index table using a combination of aggregate documents and physical documents. This may notably happen when some physical documents are not referenced or do not reference other documents. Thus, the process of figure 4 may be used in combination with conventional processes.

The invention is not limited to the examples and embodiments described in reference to the drawings. Notably, both embodiments of the invention may be used in combination or separately. Thus, the example of figure 3 may be used for displaying results provided by a conventional search engine. A conventional method may be used for displaying the results of a search engine according to the second embodiment. Figure 2 shows an example where two referenced documents are displayed; as discussed, one may also display more than two referenced documents.

## Claims

1. A computer-implemented process for searching among a collection of Internet or HTML documents (30, 32, 34, 36, 38, 40, 42), the collection comprising referencing documents and referenced documents referenced in the referencing documents by use of links such as Universal Resource Locators, wherein said referencing and referenced documents contain index terms, the process comprising:
- for a referencing document of the collection:
- recognising documents referenced in said referencing document; and
- aggregating (70) said referencing document (32) with documents (34) it references to form an aggregate document, said aggregate document formed being a single logical document associated with the documents forming said aggregate document;
- indexing said aggregate document, based on index terms contained in the referencing and referenced documents forming said aggregate document, to form an index, wherein an entry in the index table is associated with the referencing and referenced documents forming the aggregate document;
- searching (74) among aggregate documents by operating on said index; and
- providing (74), as a result, an aggregate document.

2. The process of claim 1, wherein the step of recognizing referenced documents comprises:
- scanning said referencing document to locate references or links to documents referenced in said referencing document.

3. The process of claim 1 or 2, further comprising the step of displaying an aggregate document with
- a content (52) of the referencing document (36); and
- information or attribute (54, 56, 58, 60, 62, 64) of the referenced documents (40, 42).

4. The process of claim 3, wherein the information or attribute comprise a link to the referenced document.

5. The process of claim 3, wherein the process comprises, for a result, the display of
- content (52) of the referencing document (36);
- information or attribute (54, 56, 58) of a first document (40) referenced in the referencing document; and
- information or attribute (60, 62, 64) of a second document (42) referenced in the referencing document.

6. The process of claim 3, wherein the collection comprises a referencing document and at least two referenced documents referenced in the referencing document and wherein the process further comprises a step of selecting a subset of the referenced documents.

7. The process of one of claims 3, wherein the collection comprises a referencing document and at least two referenced documents referenced in the referencing document and wherein the process further comprises a step of sorting referenced documents.

8. A search engine comprising program code means for implementing the steps of any one of the claims 1 to 7.

## Patentansprüche

1. Computerimplementiertes Verfahren zum Suchen in einer Zusammenstellung von Internet- oder HTML-Dokumenten (30, 32, 34, 36, 38, 40, 42), wobei die Zusammenstellung referenzierende Dokumente und referenzierte Dokumente umfasst, die in den referenzierenden Dokumenten mit Hilfe von Links wie z.B. Universal Resource Locators referenziert werden, wobei die referenzierenden und referenzierten Dokumente Indexbegriffe enthalten, wobei das Verfahren umfasst:
- für ein referenzierendes Dokument der Zusammenstellung:
- Erkennen von Dokumenten, die in dem referenzierenden Dokument referenziert werden; und
- Zusammenführen (70) des referenzierenden Dokuments (32) mit Dokumenten (34), die es referenziert, um so ein Gesamtdokument zu bilden, wobei das gebildete Gesamtdokument ein einzelnes logisches Dokument ist, das den Dokumenten zugeordnet wird, die das Gesamtdokument bilden;
- Indizieren des Gesamtdokuments anhand von Indexbegriffen, die in den referenzierenden und den referenzierten Dokumenten enthalten sind, die das Gesamtdokument bilden, um einen Index zu bilden, wobei ein Eintrag in der Indextabelle den referenzierenden und referenzierten Dokumenten zugeordnet wird, die das Gesamtdokument bilden;
- Suchen (74) in den Gesamtdokumenten durch Arbeiten mit dem Index; und
- Bereitstellen (74) eines Gesamtdokuments als Ergebnis.

2. Verfahren nach Anspruch 1, wobei der Schritt des Erkennens referenzierter Dokumente umfasst:
- Durchsuchen der referenzierenden Dokumente, um Referenzen oder Links zu Dokumenten zu lokalisieren, die in dem referenzierenden Dokument referenziert werden.

3. Verfahren nach Anspruch 1 oder 2, ferner umfassen den Schritt von Darstellen eines Gesamtdokuments mit
- einem Inhalt (52) des referenzierenden Dokuments (36); und
- einer Information oder einem Attribut (54, 56, 58, 60, 62, 64) des referenzierten Dokuments (40, 42).

4. Verfahren nach Anspruch 3, wobei die Information oder das Attribut einen Link zu dem referenzierten Dokument umfassen.

5. Verfahren nach Anspruch 3, wobei das Verfahren als Ergebnis die Anzeige umfasst von
- einem Inhalt (52) des referenzierenden Dokuments (36);
- einer Information oder einem Attribut (54, 56, 58) eines ersten Dokuments (40), das in dem referenzierenden Dokument referenziert wird; und
- einer Information oder einem Attribut (60, 62, 64) eines zweiten Dokuments (42), das in dem referenzierenden Dokument referenziert wird.

6. Verfahren nach Anspruch 3, wobei die Zusammenstellung ein referenzierendes Dokument und mindestens zwei referenzierte Dokumente umfasst, die in dem referenzierenden Dokument referenziert werden, und wobei das Verfahren ferner einen Schritt des Auswählens einer Untermenge der referenzierten Dokumente umfasst.

7. Verfahren nach Anspruch 3, wobei die Zusammenstellung ein referenzierendes Dokument und mindestens zwei referenzierte Dokumente umfasst, die in dem referenzierenden Dokument referenziert werden, und wobei das Verfahren ferner einen Schritt des Sortierens der referenzierten Dokumente umfasst.

8. Suchmaschine mit Programmkodemitteln zum Ausführen der Stufen des Verfahrens nach einem der Ansprüche 1 bis 7.

## Revendications

1. Procédé mis en oeuvre par un ordinateur pour effectuer une recherche au sein d'une collection de documents Internet ou HTML (30, 32, 34, 36, 38, 40, 42), la collection comprenant des documents de référencement et des documents référencés, qui sont référencés dans les documents de référencement, par utilisation de liens tels que des adresses URL, dans lequel lesdits documents de référencement et lesdits documents référencés contiennent des termes d'indexation, le procédé comprenant les étapes consistant à :
- pour un document de référencement de la collection :
- reconnaître des documents référencés dans ledit document de référencement ; et
- agréger (70) ledit document de référencement (32) avec des documents (34) qu'il référence, de façon à former un document agrégé, ledit document agrégé formé étant un document logique unique associé aux documents qui forment ledit document agrégé ;
- indexer ledit document agrégé, sur la base de termes d'indexation contenus dans les documents de référencement et dans les documents référencés qui forment ledit document agrégé, de façon à former un index, dans lequel une entrée dans la table d'indexation est associée aux documents de référencement et aux documents référencés qui forment le document agrégé ;
- effectuer une recherche (74) parmi des documents agrégés en opérant sur ledit index ; et
- fournir (74), en résultat, un document agrégé.

2. Procédé selon la revendication 1, dans lequel l'étape consistant à reconnaître des documents référencés comprend l'étape consistant à :
- numériser ledit document de référencement afin de localiser des références ou des liens vers des documents référencés dans ledit document de référencement.

3. Procédé selon la revendication 1 ou 2, comprenant en outre l'étape consistant à afficher un document agrégé avec :
- un contenu (52) du document de référencement (36) ; et
- des informations ou des attributs (54, 56, 58, 60, 62, 64) des documents référencés (40, 42).

4. Procédé selon la revendication 3, dans lequel les informations ou les attributs comprennent un lien vers le document référencé.

5. Procédé selon la revendication 3, dans lequel le procédé comprend, pour un résultat, l'affichage de :
- un contenu (52) du document de référencement (36);
- des informations ou des attributs (54, 56, 58) d'un premier document (40) référencé dans le document de référencement ; et
- des informations ou des attributs (60, 62, 64) d'un deuxième document (42) référencé dans le document de référencement.

6. Procédé selon la revendication 3, dans lequel la collection comprend un document de référencement et au moins deux documents référencés, qui sont référencés dans le document de référencement, et dans lequel le procédé comprend en outre une étape consistant à sélectionner un sous-ensemble des documents référencés.

7. Procédé selon l'une des revendications 3, dans lequel la collection comprend un document de référencement et au moins deux documents référencés, qui sont référencés dans le document de référencement, et dans lequel le procédé comprend en outre une étape consistant à trier des documents référencés.

8. Moteur de recherche comprenant des moyens de code de programme pour implémenter les étapes de l'une quelconque des revendications 1 à 7.
